# EUROPEAN PATENT APPLICATION

(11) **EP 4 354 630 A1**
(43) Date of publication of application: **17.04.2024**
(21) Application number: 22885984.9
(22) Date of filing: 25.10.2022
(51) Int. Cl.: H01M 50/457, H01M 50/46, H01M 50/451, H01M 50/434, H01M 10/0525

(54) **SEPARATOR AND BATTERY COMPRISING SAME**

(30) Priority: 25.10.2021 CN 202111251994; 25.10.2021 CN 202111241330; 25.10.2021 CN 202111243132
(71) Applicant: Zhuhai CosMX Battery Co., Ltd., Zhuhai, Guangdong 519180 (CN)
(72) Inventor: MU, Yingdi, Zhuhai, Guangdong 519180 (CN); ZHANG, Zulai, Zhuhai, Guangdong 519180 (CN); WANG, Hai, Zhuhai, Guangdong 519180 (CN); LI, Suli, Zhuhai, Guangdong 519180 (CN)
(74) Representative: Murgitroyd & Company
(86) International application number: PCT/CN2022/127484
(87) International publication number: WO 2023/072107

(57) **Abstract**

The present application provides a separator and a battery including the separator. The separator includes a substrate, heat-resistant layers, and an adhesive layer, the heat-resistant layers are disposed on two opposite surfaces of the substrate, and the adhesive layer is disposed on the heat-resistant layer; and an adhesive force between the adhesive layer and negative electrode is A, a peel force between a heat-resistant layer and the substrate is B, and a ratio of A to B (A/B) is greater than 1. In the present application, heat-resistant layers of a separator are bonded to surfaces of positive electrode and negative electrode, so that it is difficult for the positive electrode and the negative electrode to be shorted at a high temperature, thereby improving safety performance of a battery. In addition, in the present application, an ethyl propionate solvent is added to a non-aqueous electrolyte solution, so that low-temperature performance of a battery cell can be further considered. In the present application, based on a synergistic effect between a separator and an electrolyte solution, for a battery obtained through preparation, safety performance of the cell is effectively improved, and a low-temperature performance of the cell is considered.

## Description

The present application claims the priority of the Chinese Patent Application No. 202111251994.0, filed on October 25, 2021 and entitled "BATTERY", the priority of the Chinese Patent Application No. 202111241330.6, filed on October 25, 2021 and entitled "BATTERY", and the priority of the Chinese Patent Application No. 202111243132.3, filed on October 25, 2021 and entitled "SEPARATOR AND BATTERY COMPRISING THE SAME". All of the aforementioned patent applications are hereby incorporated by reference in their entireties.

### TECHNICAL FIELD

The present application pertains to the field of batteries, and relates to a separator and a battery including the separator.

### BACKGROUND

In recent years, lithium-ion batteries have been widely used in a smartphone, a tablet computer, intelligent wearing, an electric tool, an electric vehicle, and other fields. With increasing application of lithium-ion batteries, use environment and requirements of consumers for lithium-ion batteries are constantly improving. This requires that lithium-ion batteries have high safety while taking into account high and low temperature performance.

Currently, there is a potential safety hazard in a use process of lithium-ion batteries. For example, when a battery is in some extreme use cases such as a continuous high temperature, a serious safety accident such as a fire or even an explosion may occur. The problem is mainly caused by the following two aspects: In one aspect, a structure of a positive electrode material is unstable at high temperature and high voltage, metal ions are easily dissolved from the positive electrode and reduced and deposited on a negative electrode surface, thereby destroying a solid electrolyte interphase (SEI) film structure on the negative electrode surface, and resulting in an increasing negative electrode impedance and an increasing battery thickness. A large amount of heat is released from a violent reaction between an electrolyte solution and lithium graphite, to make a temperature of a cell continuously increase, and a safety accident is caused when heat is continuously accumulated and cannot be released. In the other aspect, heat shrinkage of a separator at high temperature leads to short circuit between the positive and negative electrodes, thereby significantly reducing safety performance of the battery.

To overcome the foregoing technical problems, a lithium-ion battery with high safety and high voltage needs to be developed urgently. Currently, a ceramic layer is coated on a surface of a polyolefin substrate, and a flame retardant (such as trimethyl phosphate) is added to an electrolyte solution to improve safety performance of a battery. However, a method of only using a ceramic separator cannot meet safety performance of a battery in a high-voltage system, and a method of adding the flame retardant additive often causes deterioration of battery performance, severely shortening a battery life. Therefore, how to develop a battery without affecting electrochemical performance of the battery in high voltage and having high safety is a technical problem that needs to be urgently solved in the field of lithium-ion batteries.

### SUMMARY

To improve the foregoing technical problems, the present application provides a separator and a battery including the separator, and the battery has both high safety performance and high voltage.

To implement the foregoing objectives, the following technical solutions are used in the present application.

A first aspect of the present application provides a separator. The separator includes a substrate, heat-resistant layers, and an adhesive layer, the heat-resistant layers are disposed on two opposite surfaces of the substrate, and the adhesive layer is disposed on the heat-resistant layer. An adhesive force between the adhesive layer and negative electrode is A, a peel force between a heat-resistant layer and the substrate is B, and a ratio of A to B (A/B) is greater than 1.

According to the separator provided in the first aspect of the present application, the ratio of A to B ranges from 2.5 to 6.5, for example, is 2.5, 2.7, 3.0, 3.3, 3.5, 4.0, 4.5, 4.8, 5.0, 5.3, 5.5, 6.0, 6.2, 6.4, or 6.5.

According to the separator provided in the first aspect of the present application, a thickness of the heat-resistant layer ranges from 1 µm to 5 µm, for example, is 1 µm, 2 µm, 3 µm, 4 µm, or 5 µm.

According to the separator provided in the first aspect of the present application, a heat shrinkage of the heat-resistant layer at 150°C for 1 hour is less than or equal to 5%, for example, is 5%, 4%, 3%, 2.5%, 2%, 1.5%, 1%, or 0.5%.

According to the separator provided in the first aspect of the present application, the adhesive force A between the adhesive layer and the negative electrode is greater than or equal to 10 N/m.

According to the separator provided in the first aspect of the present application, the peel force B between the heat-resistant layer and the substrate is 5 N/m or less.

According to the separator provided in the first aspect of the present application, after a battery cell containing the separator in the present application is applied with a pressure ranging from 0.6 Mpa to 3.0 MPa, a current ranging from 0.01C to 1C, a hot-pressing time ranging from 30 minutes to 300 minutes in a temperature ranging from 70°C to 90°C, the heat-resistant layer in 30% or more of the contact part of the heat-resistant layer and the adhesive layer with a positive electrode plate is bonded to an active material layer of the positive electrode plate by using the adhesive layer, and/or, the heat-resistant layer in 30% or more of the contact part of the heat-resistant layer and the adhesive layer with a negative electrode plate is bonded to an active material layer of the negative electrode plate (heat-resistant layer content on an electrode plate) by using the adhesive layer.

According to the separator provided in the first aspect of the present disclosure, a thickness of the heat-resistant layer and the adhesive layer that are transferred and bonded to the positive electrode plate plus a thickness of the separator in a corresponding region is equal to a thickness of the separator on which the heat-resistant layer and the adhesive layer are not transferred; and/or, a thickness of the heat-resistant layer and the adhesive layer that are transferred and bonded to the negative electrode plate plus a thickness of the separator in a corresponding region is equal to a thickness of the separator on which the heat-resistant layer and the adhesive layer are not transferred.

According to the separator provided in the first aspect of the present application, the substrate is selected from one, two, or more of polymer polyethylene, polypropylene, polyethylene terephthalate, polybutylene terephthalate, polystyrene, poly(p-phenylene), polyphenylene, polyimide, polyamide, aramid, or poly(p-phenylene benzobisthiazole).

According to the separator provided in the first aspect of the present application, the heat-resistant layer includes a ceramic, a heat-resistant polymer, and a binder.

Preferably, in the heat-resistant layer, a mass proportion of the ceramic ranges from 5 wt% to 20 wt%, and for example, is 5 wt%, 10 wt%, 15 wt%, 20 wt%, or a point value in a range formed by any two of the foregoing values.

Preferably, in the heat-resistant layer, a mass proportion of the heat-resistant polymer ranges from 60 wt% to 94 wt%, for example, is 60 wt%, 70 wt%, 80 wt%, 90 wt%, 94 wt%, or a point value in a range formed by any two of the foregoing values.

Preferably, in the heat-resistant layer, a mass proportion of the binder ranges from 0.5 wt% to 20 wt%, for example, is 0.5 wt%, 1 wt%, 5 wt%, 10 wt%, 15 wt%, 20 wt%, or a point value in a range formed by any two of the foregoing values.

According to the separator provided in the first aspect of the present application, the ceramic is selected from one, two, or more of silica, aluminum oxide, zirconium dioxide, magnesium hydroxide, boehmite, barium sulfate, fluorphlogopite, fluorapatite, mullite, cordierite, aluminum titanate, titanium dioxide, copper oxide, zinc oxide, boron nitride, aluminum nitride, magnesium nitride, or attapulgite.

According to the separator provided in the first aspect of the present application, the heat-resistant polymer is selected from one, two, or more of polyimide, aramid resin, polyamide and polybenzimidazole, polyphenyl ester, polyborodiphenylsiloxane, polyphenylene sulfide, chlorinated polyether, or polyarylsulfone.

According to the separator provided in the first aspect of the present application, the binder is selected from one, two, or more of polytetrafluoroethylene, polyvinylidene fluoride, hexafluoropropylene modified polyvinylidene fluoride, a hexafluoropropylene-vinylidene fluoride copolymer (for example, a polyvinylidene fluoride-hexafluoropropylene copolymer), polyimide, polyacrylonitrile, polymethyl methacrylate, cellulose acetate, butyl acetate cellulose, propyl acetate cellulose, cyanoethyl amylopectin, cyanoethyl polyvinyl alcohol, cyanoethyl cellulose, cyanoethyl sucrose, amylopectin, carboxymethyl cellulose, or an acrylonitrile styrene butadiene copolymer.

According to the separator provided in the first aspect of the present application, a thickness of the adhesive layer ranges from 0.5 µm to 2 µm, and for example, is 0.5 µm, 1 µm, or 2 µm.

According to the separator provided in the first aspect of the present application, a copolymer used in the adhesive layer is selected from one, two, or more of polytetrafluoroethylene, polyvinylidene fluoride, a polyvinylidene fluoride-hexafluoropropylene copolymer, hexafluoropropylene modified polyvinylidene fluoride, polyimide, polyacrylonitrile, polymethyl methacrylate, cellulose acetate, butyl acetate cellulose, propyl acetate cellulose, cyanoethyl amylopectin, cyanoethyl polyvinyl alcohol, cyanoethyl cellulose, cyanoethyl sucrose, amylopectin, carboxymethyl cellulose, or an acrylonitrile styrene butadiene copolymer.

According to the separator provided in the first aspect of the present application, a solvent used for the heat-resistant layer and the adhesive layer is selected from at least one of N,N-dimethylacetamide (DMAC), acetone, tetrahydrofuran, dichloromethane, chloroform, dimethylformamide, N-methyl-2-pyrrolidone, cyclohexane, methanol, ethanol, isopropanol, or water.

A second aspect of the present application provides a battery, and the battery includes the foregoing separator.

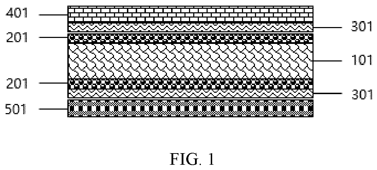

According to the battery provided in the second aspect of the present application, the battery further includes a positive electrode plate, a negative electrode plate, and a non-aqueous electrolyte solution. The foregoing separator is disposed between the positive electrode plate and the negative electrode plate. The battery in the present application may be, for example, a lithium-ion battery. FIG. 1 is a schematic diagram of a partial cross-section of a lithium-ion battery according to the present application.

According to the battery provided in the second aspect of the present application, the non-aqueous electrolyte solution includes a non-aqueous organic solvent and an additive, where the non-aqueous organic solvent includes ethyl propionate.

According to the battery provided in the second aspect of the present application, the additive is selected from non-aqueous electrolyte additives known in the art. The additives may be prepared by using a method known in the art, or may be purchased commercially.

According to the battery provided in the second aspect of the present application, an addition amount of the ethyl propionate is 10-50 wt% of a total mass of the non-aqueous electrolyte solution, preferably, ranges from 20 wt% to 40 wt%, for example, is 10 wt%, 15 wt%, 20 wt%, 25 wt%, 30 wt%, 35 wt%, 40 wt%, 45%, or 50%.

A third aspect of the present application further provides a battery, including a positive electrode plate, a negative electrode plate, a separator disposed between the positive electrode plate and the negative electrode plate, and a non-aqueous electrolyte solution.

The separator includes a substrate, heat-resistant layers, and an adhesive layer, the heat-resistant layers are disposed on two opposite surfaces of the substrate, and the adhesive layer is disposed on the heat-resistant layer. An adhesive force between the adhesive layer and negative electrode is A, a peel force between the heat-resistant layer and the substrate is B, and a ratio of A to B is greater than 1.

The non-aqueous electrolyte solution includes a non-aqueous organic solvent and an additive, where the non-aqueous organic solvent includes ethyl propionate, and the additive includes a carbonate compound.

According to the battery provided in the third aspect of the present application, the carbonate compound may be selected from at least one of fluoroethylene carbonate, vinylene carbonate, vinyl ethylene carbonate, or vinyl ethylene carbonate.

According to the battery provided in the third aspect of the present application, in the non-aqueous electrolyte solution, an addition amount of the carbonate compound accounts for 1-10 wt% of a total mass of the non-aqueous electrolyte solution, preferably, ranges from 5 wt% to 10 wt%, for example, is 1 wt%, 2 wt%, 3 wt%, 3.5 wt%, 4 wt%, 4.5 wt%, 5 wt%, 6 wt%, 6.5 wt%, 7 wt%, 7.8 wt%, 8 wt%, wt% 9, 10 wt%, or a point value in a range formed by any two of the foregoing values.

According to the battery provided in the third aspect of the present application, the ratio of A to B ranges from 1.5 to 6.0, and for example, is 1.5, 2.0, 2.5, 3.0, 3.5, 4.0, 4.5, 5.0, 5.5, 6.0, or a point value in a range formed by any two of the foregoing values.

A fourth aspect of the present application further provides a battery, including a positive electrode plate, a negative electrode plate, a separator disposed between the positive electrode plate and the negative electrode plate, and a non-aqueous electrolyte solution.

The separator includes a substrate, heat-resistant layers, and an adhesive layer, the heat-resistant layers are disposed on two opposite surfaces of the substrate, and the adhesive layer is disposed on the heat-resistant layer. An adhesive force between the adhesive layer and negative electrode is A, a peel force between the heat-resistant layer and the substrate is B, and a ratio of A to B is greater than 1.

The non-aqueous electrolyte solution includes a non-aqueous organic solvent and an additive, where the non-aqueous organic solvent includes ethyl propionate, and the additive includes a compound including a nitrile group.

It should be noted that the foregoing compound that includes a nitrile group refers to a compound that includes a cyano group.

According to the battery in the fourth aspect of the present application, the compound including a nitrile group may be selected from at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylbutadionitrile, 2-methylglutaronitrile, 2,4-dimethylglutaronitrile, 2,2,4,4-Tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-heptadionitrile, 1,4-bis(cyanoethoxy)butane, ethylene glycol bis(2-cyanoethyl) ether, diethylene glycol bis(2-cyanoethyl) ether, triethylene glycol bis(2-cyanoethyl) ether, tetraethylene glycol bis(2-cyanoethyl) ether, 3,6,9,12,15,18-hexaoxeicosanic acid dinitrile, 1,3-bis(2-cyanoethoxy)propane, 1,4-bis(2-cyanoethoxy) butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentatrionitrile, 1,2,3-propanetricarbonitrile, 1,3,6-hexane trinitrile , glycerol trinitrile, 1,2,6-hexanetrinitrile, 1,2,3-tris(2-cyanoethoxy)propane, 1,2,4-tri(2-cyanoethoxy) butane, 1,1,1-tri(cyanoethoxymethylene)ethane, 1,1,1-tri(cyanoethoxymethylene)propane, 3-methyl-1,3,5-tri(cyanoethoxy)pentane, 1,2,7-tri(cyanoethoxy)heptane, 1,2,6-tri(cyanoethoxy) hexane, or 1,2,5-tri(cyanoethoxy)pentane.

According to the battery provided in the fourth aspect of the present application, in the non-aqueous electrolyte solution, an addition amount of the compound including a nitrile group accounts for 1-10 wt% of a total mass of the non-aqueous electrolyte solution, preferably, ranges from 2 wt% to 5 wt%, for example, is 1 wt%, 2 wt%, 3 wt%, 3.5 wt%, 4 wt%, 4.5 wt%, 5 wt%, 5.5 wt%, 6 wt%, 7 wt%, 8 wt%, 9 wt%, 10 wt%, or a point value in a range formed by any two of the foregoing values.

According to the battery provided in the fourth aspect of the present application, the ratio (A/B) of A to B ranges from 1.5 to 4.5, and for example, is 1.5, 2.0, 2.5, 3.0, 3.5, 4.0, 4.5, or a point value in a range formed by any two of the foregoing values.

According to the batteries provided in the third aspect and the fourth aspect of the present application, an addition amount of the ethyl propionate is 10-40 wt% of a total mass of the non-aqueous electrolyte solution, preferably, ranges from 20 wt% to 40 wt%, for example, is 10 wt%, 15 wt%, 20 wt%, 25 wt%, 30 wt%, 35 wt%, 40 wt%, or a point value in a range formed by any two of the foregoing values.

According to the batteries provided in the third aspect and the fourth aspect of the present application, the additive further optionally includes another additive, for example, the another additive may be at least one of tris(trimethylsilane) phosphite, tris(trimethylsilyl) borate, lithium bis(trifluoromethanesulphonyl)imide, lithium bis(fluorosulfonyl)imide, 1,3-propanesulfonate, 1,3-propenesultone, ethylene sulphite, ethylene sulfate, vinylene carbonate, fluoroethylene carbonate, lithium bis(oxalate)borate, lithium difluoro(oxalate)borate, lithium difluoro(oxalate)phosphate or vinyl ethylene carbonate.

Preferably, an addition amount of the another additive accounts for 0-10 wt% of a total mass of the non-aqueous electrolyte solution, for example, is 0 wt%, 1 wt%, 2 wt%, 5 wt%, 8 wt%, 10 wt%, or a point value in a range formed by any two of the foregoing values.

According to the batteries provided in the third aspect and the fourth aspect of the present application, the additives may be prepared by using a method known in the art, or may be purchased commercially.

According to the batteries provided in the third aspect and the fourth aspect of the present application, a thickness of the heat-resistant layer ranges from 1 µm to 3 µm, and for example, is 1 µm, 2 µm, or 3 µm.

According to the batteries provided in the third aspect and the fourth aspect of the present application, a heat shrinkage of the heat-resistant layer at 150°C for 1 hour is less than or equal to 5%, for example, is 5%, 4%, 3%, 2%, or 1%.

According to the batteries provided in the third aspect and the fourth aspect of the present application, an adhesive force between the adhesive layer and the negative electrode is greater than or equal to 10 N/m.

According to the battery provided in the third aspect and the fourth aspect of the present application, a peel force between the heat-resistant layer and the substrate is less than 5 N/m.

According to the batteries provided in the third aspect and the fourth aspect of the present application, after a battery cell containing the separator in the present application is applied with a pressure ranging from 0.6 Mpa to 3.0 MPa, a current ranging from 0.01C to 1C, a hot-pressing time ranging from 30 minutes to 300 minutes in a temperature ranging from 70°C to 90°C, the heat-resistant layer in 30% or more of the contact part of the heat-resistant layer and the adhesive layer with a positive electrode plate is bonded to an active material layer of the positive electrode plate by using the adhesive layer, and/or, the heat-resistant layer in 30% or more of the contact part of the heat-resistant layer and the adhesive layer with a negative electrode plate is bonded to an active material layer of the negative electrode plate by using the adhesive layer.

According to the batteries provided in the third aspect and the fourth aspect of the present application, a thickness of the heat-resistant layer and the adhesive layer that are transferred and bonded to the positive electrode plate plus a thickness of the separator in a corresponding region is equal to a thickness of the separator on which the heat-resistant layer and the adhesive layer are not transferred; and/or, a thickness of the heat-resistant layer and the adhesive layer that are transferred and bonded to the negative electrode plate plus a thickness of the separator in a corresponding region is equal to a thickness of the separator on which the heat-resistant layer and the adhesive layer are not transferred.

According to the batteries provided in the third aspect and the fourth aspect of the present application, the substrate is selected from one, two, or more of polyethylene, polypropylene, polyimide, polyamide, or aramid.

According to the batteries provided in the third aspect and the fourth aspect of the present application, the heat-resistant layer includes a ceramic, a heat-resistant polymer, and a binder.

Preferably, in the heat-resistant layer, a proportion of the ceramic ranges from 5 wt% to 20 wt%, and for example, is 5 wt%, 10 wt%, 15 wt%, 20 wt%, or a point value in a range formed by any two of the foregoing values.

Preferably, in the heat-resistant layer, a proportion of the heat-resistant polymer ranges from 60 wt% to 94 wt%, for example, is 60 wt%, 70 wt%, 80 wt%, 90 wt%, 94 wt%, or a point value in a range formed by any two of the foregoing values.

Preferably, in the heat-resistant layer, a proportion of the binder ranges from 0.5 wt% to 20 wt%, for example, is 0.5 wt%, 1 wt%, 1.5 wt%, 3 wt%, 4 wt%, 5 wt%, 6 wt%, 8 wt%, 10 wt%, 15 wt%, 20wt%, or a point value in a range formed by any two of the foregoing values.

According to the batteries provided in the third aspect and the fourth aspect of the present application, the ceramic is selected from one, two, or more of aluminum oxide, boehmite, magnesium oxide, boron nitride, or magnesium hydroxide.

According to the batteries provided in the third aspect and the fourth aspect of the present application, the heat-resistant polymer is selected from one or two of polyimide, aramid resin, polyamide, or polybenzimidazole.

According to the batteries provided in the third aspect and the fourth aspect of the present application, the binder is selected from one, two, or more of polytetrafluoroethylene, polyvinylidene fluoride, polyvinylidene fluoride-hexafluoropropylene modification and a copolymer thereof, polyimide, polyacrylonitrile, or polymethyl methacrylate.

According to the batteries provided in the third aspect and the fourth aspect of the present application, a thickness of the adhesive layer ranges from 0.5 µm to 2 µm, and for example, is 0.5 µm, 1 µm, or 2 µm.

According to the batteries provided in the third aspect and the fourth aspect of the present application, a polymer used in the adhesive layer is selected from one, two, or more of polytetrafluoroethylene, polyvinylidene fluoride, a polyvinylidene fluoride-hexafluoropropylene copolymer and a modified copolymer thereof, polyimide, polyacrylonitrile, or polymethyl methacrylate.

According to the batteries provided in the third aspect and the fourth aspect of the present application, a solvent used in the heat-resistant layer and the adhesive layer is selected from at least one of acetone, tetrahydrofuran, dichloromethane, chloroform, dimethylformamide, N-methyl-2-pyrrolidone, cyclohexane, methanol, ethanol, isopropanol, or water.

According to the batteries provided in the second aspect, the third aspect, and the fourth aspect of the present application, the non-aqueous organic solvent further includes at least one of ethylene carbonate (EC), propylene carbonate (PC), dimethyl carbonate, diethyl carbonate, ethyl methyl carbonate, propyl propionate (PP), or propyl acetate, and preferably, includes ethylene carbonate (EC), propylene carbonate (PC), and propyl propionate (PP).

According to an exemplary implementation of the batteries provided in the second aspect and fourth aspects of the present application, the ethylene carbonate (EC), propylene carbonate (PC), and propyl propionate (PP) are mixed at a mass ratio of 2:1:2. According to an exemplary implementation of the battery according to the third aspect of the present application, the ethylene carbonate (EC), propylene carbonate (PC), and propyl propionate (PP) are mixed at a mass ratio of 1:1:1.

According to the batteries provided in the second aspect, the third aspect, and the fourth aspect of the present application, the non-aqueous electrolyte further includes lithium salt.

According to the batteries provided in the second aspect, the third aspect, and the fourth aspect of the present application, the lithium salt is selected from at least one of lithium bis(trifluoromethanesulfonyl)imide, lithium bis(fluorosulfonyl)imide, or lithium hexafluorophosphate (LiPF₆), and preferably, is lithium hexafluorophosphate (LiPF₆).

According to the batteries provided in the second aspect, the third aspect, and the fourth aspect of the present application, the lithium salt accounts for 13-20 wt% of a total mass of the non-aqueous electrolyte solution, for example, is 13 wt%, 14 wt%, 15 wt%, 16 wt%, 17 wt%, 18 wt%, 19 wt%, 20 wt%, or a point value in a range formed by any two of the foregoing values.

According to the batteries provided in the second aspect, the third aspect, and the fourth aspect of the present application, the battery is, for example, a lithium-ion battery.

According to the batteries provided in the second aspect, the third aspect, and the fourth aspect of the present application, the positive electrode plate includes a positive electrode current collector and a positive electrode active material layer coated on a surface of at least one side of the positive electrode current collector.

Preferably, the positive electrode active material layer includes a positive electrode active material, a conductive agent, and a binder.

According to an exemplary implementation of the battery provided in the second aspect of the present application, a mass ratio of the positive electrode active material, the conductive agent, and the binder is 97.0:1.0:2.0. According to an exemplary implementation of the battery provided in the third aspect of the present application, a mass ratio of the positive electrode active material, the conductive agent, and the binder is 97.6:1.1:1.3. According to an exemplary implementation of the battery provided in the fourth aspect of the present application, a mass ratio of the positive electrode active material, the conductive agent, and the binder is 98.2:1.0:0.8.

According to the batteries provided in the second aspect, the third aspect, and the fourth aspect of the present application, the positive electrode active material is selected from lithium cobalt (LiCoO₂) or lithium cobalt (LiCoO₂) doped and coated with two or more elements in Al, Mg, Mn, Cr, Ti, or Zr. A chemical formula of lithium cobalt (LiCoO₂) doped and coated with two or more elements in Al, Mg, Mn, Cr, Ti, or Zr is LiₓCo_{1-y1-y2-y3-y4}A_{y1}B _{y2}C_{y3}D_{y4}O₂, where 0.95 ≤ x ≤ 1.05, 0.01 ≤ y1 ≤ 0.1, 0.01 ≤ y2 ≤ 0.1, 0 ≤ y3 ≤ 0.1, 0 ≤ y4 ≤ 0.1, and A, B, C, and D are selected from two or more elements in Al, Mg, Mn, Cr, Ti, or Zr.

According to the batteries provided in the second aspect, the third aspect, and the fourth aspect of the present application, a median particle diameter D50 of lithium cobalt doped and coated with two or more elements in Al, Mg, Mn, Cr, Ti, or Zr ranges from 10 µm to 17 µm, and a specific surface area BET ranges from 0.15 m²/g to 0.45 m²/g.

According to the battery provided in the second aspect of the present application, the conductive agent in the positive electrode active material layer is selected from at least one of acetylene black, carbon nanotube, Super-P, ketjen black, or vapor-grown carbon fiber. According to the batteries provided in the third aspect and the fourth aspect of the present application, the conductive agent in the positive electrode active material layer is selected from acetylene black.

According to the battery provided in the second aspect of the present application, the binder in the positive electrode active material layer is selected from at least one of polyvinylidene fluoride (PVDF) or polyvinylpyrrolidone (PVP). According to the batteries provided in the third aspect and the fourth aspect of the present application, the binder in the positive electrode active material layer is selected from polyvinylidene fluoride (PVDF).

According to the batteries provided in the second aspect, the third aspect, and the fourth aspect of the present application, the negative electrode plate includes a negative electrode current collector and a negative electrode active material layer coated on a surface of either or both sides of the negative electrode current collector, and the negative electrode active material layer includes a negative electrode active material, a conductive agent, and a binder.

According to the batteries provided in the second aspect, the third aspect, and the fourth aspect of the present application, the negative electrode active material is selected from graphite.

According to the batteries provided in the second aspect, the third aspect, and the fourth aspect of the present application, the negative electrode active material further optionally includes SiOₓ/C or Si/C, where 0 < x < 2. For example, the negative electrode active material further includes 1-12 wt% SiOₓ/C, for example, the content is 1 wt%, 2 wt%, 5 wt%, 8 wt%, 10 wt%, 12 wt%, or a point value in a range formed by any two of the foregoing values.

According to the batteries provided in the second aspect, the third aspect, and the fourth aspect of the present application, a charging cut-off voltage of the batteries is 4.45V or higher.

Beneficial Effects of the present application are as follows:
(1) According to the separator provided in the present application, a battery is prepared by the combination with a positive electrode material and a negative electrode material, based on a synergistic effect between a separator and an electrolyte solution, which can effectively improve safety performance of a battery cell and also take into account low-temperature performance of the battery cell.
(2) In a safety separator of the present application, an adhesive force between an adhesive layer and positive and negative electrode plates is greater than a peel force between a heat-resistant layer and a substrate, and the heat-resistant layer may withstand a high temperature of 200°C or more. According to the separator of the present application, the heat-resistant layer and the adhesive layer are bonded to surfaces of the positive and negative electrode plates, so that a short circuit does not occur between the positive and negative electrodes at a high temperature, thereby improving safety performance of a battery, avoiding fire caused by a short circuit between the positive and negative electrodes of a battery cell, and further achieving effect of improving the safety performance of the battery.
(3) According to the batteries provided in the three different aspects of the present application, a non-aqueous electrolyte solution that is used includes a non-aqueous organic solvent and an additive, and an appropriate amount of ethyl propionate is added into the electrolyte solution, which may properly swell a heat-resistant layer and an adhesive layer of a separator. In this way, positive and negative electrodes of a battery cell have a better interface, so as to reduce damage and recombination of a positive electrode electrolyte interfacial film (CEI film), thereby improving stability of a positive electrode material at a high temperature and high voltage, reducing a solvent viscosity to improve electrolyte infiltration and an ionic conductivity, and further improving low temperature performance of the battery cell.
(4) According to the battery provided in the third aspect of the present application, a non-aqueous electrolyte solution that is used includes a non-aqueous organic solvent and an additive. Based on a synergistic effect of the additive and the non-aqueous organic solvent, a battery cell can have both long-time cycling and low temperature performance. In the non-aqueous electrolyte solution, in addition to adding a proper amount of ethyl propionate for improving low-temperature performance of a battery cell, a carbonate compound is also added as an additive, and the carbonate compound may be cross-linked on a negative electrode surface to form a relatively thick and stable solid electrolyte interphase film (SEI protective film), so as to prevent the electrolyte solution from being reduced on the negative electrode surface, thereby reducing heat release of side reaction.
(5) The battery provided in the fourth aspect of the present application, a non-aqueous electrolyte solution that is used includes a non-aqueous organic solvent and an additive. Based on a synergistic effect of the additive and the non-aqueous organic solvent, a battery cell can take into account high and low temperature performance. In the non-aqueous electrolyte solution, in addition to adding a proper amount of ethyl propionate for improving low-temperature performance of a battery cell, a compound containing nitrile functional groups is also added as an additive, where the compound containing nitrile functional groups may be cross-linked on a positive electrode surface to form a relatively thick and stable CEI protective film, so as to prevent the electrolyte solution from being oxidized on the surface of the positive electrode, thereby reducing heat release of side reaction.

### BRIEF DESCRIPTION OF THE DRAWINGS

FIG. 1 is a schematic diagram of a partial cross-section of a lithium-ion battery according to the present application.
In FIG. 1, 101 is a substrate; 201 is a heat-resistant layer; 301 is an adhesive layer; 401 is negative electrode; and 501 is positive electrode.

### DETAILED DESCRIPTION OF THE EMBODIMENTS

The present application is further described in detail below with reference to specific embodiments. It should be understood that the following embodiments are merely used to illustrate and explain the present application, and shall not be construed as limitation to the protection scope of the present application. All technologies implemented based on the foregoing content of the present application shall fall within the protection scope of the present application.

Unless otherwise stated, raw materials and reagents used in the following embodiments are commercially available commodities, or may be prepared by a known method.

### Comparative examples 1 and 2 and Examples 1-8

Lithium-ion batteries in Comparative examples 1 and 2 and Examples 1-8 were prepared according to the following preparation method, and a difference lies only in that different separators and electrolyte solutions were selected. The difference is specifically shown in Table 1.

### (1) Preparation of a positive electrode plate

A positive electrode active material LiCoO₂, a binder polyvinylidene fluoride (PVDF), and a conductive agent acetylene black were mixed at a weight ratio of 97:1.0:2, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 11 µm. The coated aluminum foil was baked in a five-stage oven with different temperatures and then dried in an oven at 120°C for 8 hours, followed by rolling and cutting, to obtain the required positive electrode plate.

### (2) Preparation of a negative electrode plate

A negative electrode material artificial graphite with a mass percentage of 97%, a conductive agent single-walled carbon nanotube (SWCNT) with a mass percentage of 0.2%, a conductive agent conductive carbon black (SP) with a mass percentage of 0.9%, a binder sodium carboxymethyl cellulose (CMC) with a mass percentage of 0.9%, and a binder styrene-butadiene rubber (SBR) with a mass percentage of 1.0% were made into a slurry by using a wet process. The slurry was applied on a surface of a negative electrode current collector with copper foil having a thickness of 6 µm, and then drying (temperature: 85°C, time: 5 hours), rolling and die cutting were carried out to obtain the negative electrode plate.

### (3) Preparation of a non-aqueous electrolyte solution

In a glove box filled with argon (moisture < 10 ppm, oxygen < 1 ppm), ethylene carbonate (EC), propylene carbonate (PC), and propyl propionate (PP) were evenly mixed at a mass ratio of 1:1:3, and LiPF₆ accounting for 14 wt% of a total mass of the non-aqueous electrolyte solution and ethyl propionate (specific amounts of ethyl propionate are shown in Table 1) accounting for 10-40 wt% of the total mass of the non-aqueous electrolyte solution were slowly added into the mixed solution. The mixture was stirred evenly to obtain the non-aqueous electrolyte solution.

### (4) Preparation of a separator

Ceramic and DMAC were mixed with a solid content of 20% and stirred for 30 minutes at a speed of 1500 rpm, and the mixture was recorded as solution M.

A binder and DMAC were mixed with a solid content of 10% and stirred for 60 minutes at a speed of 1500 rpm, and the mixture was recorded as solution N.

A heat-resistant polymer and DMAC were mixed with a solid content of 5% and stirred for 240 minutes at a speed of 1500 rpm, and the mixture was recorded as solution L.

The solutions M, N, L, and DMAC were mixed according to a specific proportion to obtain a mixed solution with a solid content of 6%. The mixed solution was applied on two sides of a separator PE substrate having a thickness of 5 µm by using a gravure roller. After being watered and then dried, a separator C with two sides each having a thickness of 2 µm was obtained, and the two sides of the separator C each were coated with an adhesive layer having a thickness of 1 µm.

For a ceramic type, a binder type, a heat-resistant polymer type, a polymer type used in the adhesive layer, and proportions of ceramics, binder, and heat-resistant polymer in the heat-resistant layer, refer to Table 1. An adhesive force between the prepared separator adhesive layer and the negative electrode is A, a peel force between the heat-resistant layer and the substrate is B, and a ratio of A to B is shown in Table 1.

### (5) Preparation of a lithium-ion battery

The prepared positive electrode plate, separator, and negative electrode plate were wound to obtain an unfilled bare cell. The bare cell was placed in outer packaging foil, the prepared electrolyte solution was injected into the dried bare cell, and after processes such as vacuum packaging, standing, forming, shaping, and sorting, the lithium-ion battery required was obtained.

**Table 1 Lithium-ion batteries prepared in Comparative Example 1 and 2 and Examples 1-8**

| | Ceramic type | Heat-resistant polymer | Polymer used in the adhesive layer | Binder type | Ratio of Ceramic /heat-resistant polymer /binder | Heat shrinkage of heat-resistant layer | Heat-resistant layer content on the electrode plate | Added amount of ethyl propio nate | A/B |
|---|---|---|---|---|---|---|---|---|---|
| Comparative Example 1 | Aluminum oxide | / | Polyvinylidene fluoride -hexafluoropropylene | Polymethyl methacrylate | 96/0/4 | 6.3% | 20% | 0% | 0.2 |
| Comparative Example 2 | Aluminum oxide | / | Polyvinylidene fluoride -hexafluoropropylene | Polymethyl methacrylate | 96/0/4 | 6.3% | 20% | 15% | 0.2 |
| Example 1 | Boron nitride | Aramid resin | Polyvinylidene fluoride -hexafluoropropylene | Polymethyl methacrylate | 10/89/1 | 0.5% | 95% | 15% | 6.4 |
| Example 2 | Boron nitride | Aramid resin | Polyvinylidene fluoride -hexafluoropropylene | Polymethyl methacrylate | 10/89/1 | 0.5% | 95% | 0% | 6 |
| Example 3 | Aluminum oxide | Polyamide | Polyvinylidene fluoride -hexafluoropropylene | Polymethyl methacrylate | 20/78/2 | 1.5% | 85% | 25% | 4.8 |
| Example 4 | Aluminum oxide | Polyamide | Polyvinylidene fluoride -hexafluoropropylene | Polymethyl methacrylate | 10/88/2 | 1.5% | 85% | 50% | 5.3 |
| Example 5 | Aluminum oxide | Polyimide | Polymethyl methacrylate | Carboxymethyl cellulose | 20/76/4 | 2.5% | 70% | 15% | 2.7 |
| Example 6 | Boehmite | Polyimide | Polymethyl methacrylate | Carboxymethyl cellulose | 20/76/4 | 2.5% | 70% | 30% | 3.3 |
| Example 7 | Boehmite | Polyborodiphenylsiloxane | Polyvinylidene fluoride -hexafluoropropylene | Polymethyl methacrylate | 15/83.5/ 1.5 | 1% | 80% | 20% | 6.2 |
| Example 8 | Boehmite | Polyborodiphenylsiloxane | Polyvinylidene fluoride -hexafluoropropylene | Polymethyl methacrylate | 15/83.5/ 1.5 | 1% | 80% | 40% | 6.5 |

| | | | | | | | | | |
|---|---|---|---|---|---|---|---|---|---|
| Note: "/" indicates that no material is added. | | | | | | | | | |

### Comparative examples 3-7 and Examples 9-16

Lithium-ion batteries in Comparative examples 3-7 and Examples 9-16 were prepared according to the following preparation method, and a difference lies only in that different separators and electrolyte solutions were selected. The difference is specifically shown in Table 2.

### (1) Preparation of a positive electrode plate

A positive electrode active material LiCoO₂, a binder polyvinylidene fluoride (PVDF), and a conductive agent acetylene black were mixed at a weight ratio of 97.6:1.1:1.3, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 11 µm. The coated aluminum foil was baked in a five-stage oven with different temperatures and then dried in an oven at 120°C for 8 hours, followed by rolling and cutting, to obtain the required positive electrode plate.

### (2) Preparation of a negative electrode plate

A negative electrode material artificial graphite with a mass percentage of 97.4%, a conductive agent single-walled carbon nanotube (SWCNT) with a mass percentage of 0.1%, a conductive agent conductive carbon black (SP) with a mass percentage of 0.6%, a binder sodium carboxymethyl cellulose (CMC) with a mass percentage of 0.9%, and a binder styrene-butadiene rubber (SBR) with a mass percentage of 1.0% were made into a slurry by using a wet process. The slurry was applied on a surface of a negative electrode current collector with copper foil having a thickness of 6 µm, and then drying (temperature: 85°C, time: 5 hours), rolling and die cutting were carried out to obtain the negative electrode plate.

### (3) Preparation of a non-aqueous electrolyte solution

In a glove box filled with argon (moisture < 10 ppm, oxygen < 1 ppm), ethylene carbonate (EC), propylene carbonate (PC), and propyl propionate (PP) were evenly mixed at a mass ratio of 1:1:1, and LiPF₆ accounting for 14 wt% of a total mass of the non-aqueous electrolyte solution, ethyl propionate (specific amounts of ethyl propionate are shown in Table 2) accounting for 10-40 wt% of the total mass of the non-aqueous electrolyte solution, and an additive (specific amounts and types of additives are shown in Table 2) were slowly added into the mixed solution. The mixture was stirred evenly to obtain the non-aqueous electrolyte solution.

### (4) Preparation of a separator

Ceramic and N, N-dimethylacetamide were mixed with a solid content of 20% and stirred for 30 minutes at a speed of 1500 rpm, and the mixture was recorded as solution M.

A binder and N, N-dimethylacetamide were mixed with a solid content of 10% and stirred for 60 minutes at a speed of 1500 rpm, and the mixture was recorded as solution N.

A heat-resistant polymer and N, N-dimethylacetamide were mixed with a solid content of 5% and stirred for 240 minutes at a speed of 1500 rpm, and the mixture was recorded as solution L.

The solution M, N, L, and N,N-dimethylacetamide were mixed according to a specific proportion to obtain a mixed solution with a solid content of 6%. The mixed solution was applied on two sides of a separator polyethylene substrate having a thickness of 5 µm by using a gravure roller. After being watered and then dried, a separator C with two sides each having a thickness of 2 µm was obtained, and the two sides of the separator C each were coated with an adhesive layer having a thickness of 1 µm. The ceramic is aluminum oxide, the binder is PVDF-HFP, the heat-resistant polymer is aramid resin, and a polymer used in the adhesive layer is polymethyl methacrylate. A ratio of the ceramic and the heat-resistant polymer in the heat-resistant layer is 1: 9, and a proportion of the binder in the heat-resistant layer is shown in Table 2. An adhesive force between the prepared separator adhesive layer and the negative electrode is A, a peel force between the heat-resistant layer and the substrate is B, and a ratio of A to B is shown in Table 2.

### (5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

**Table 2 Lithium-ion batteries prepared in Comparative Examples 3-7 and Examples 9-16**

| Item | Carbonate compound (additive) | Proportion of ethyl propionate in total mass of non-aqueous electrolyte solution (%) | Proportion of binder in heat-resistant layer (%) | Ratio of A to B (in the separator, an adhesive force between the adhesive layer and positive and negative electrodes is A, and a peel force between the heat-resistant layer and the substrate is B) |
|---|---|---|---|---|
| Comparative Example 3 | 5% fluoroethylene carbonate | 0.0% | 1% | 0.5 |
| Comparative Example 4 | 5% fluoroethylene carbonate | 0.0% | 2% | 2.5 |
| Comparative Example 5 | 5% fluoroethylene carbonate | 20.0% | 1% | 0.5 |
| Comparative Example 6 | / | 20.0% | 1% | 0.5 |
| Comparative Example 7 | / | 20.0% | 2% | 2.5 |
| Example 9 | 5% fluoroethylene | 20.0% | 2% | 2.5 |
| Example 10 | 8% fluoroethylene | 15.0% | 4% | 1.5 |
| Example 11 | 7% fluoroethylene | 25.0% | 1.5% | 2.0 |
| Example 12 | 9% fluoroethylene | 10.0% | 8% | 5.0 |
| Example 13 | 6% fluoroethylene carbonate and 0.5% | 28.0% | 20% | 6.0 |
| Example 14 | 10% fluoroethylene carbonate | 35.0% | 10% | 4.5 |
| Example 15 | 7% fluoroethylene carbonate and 0.8% vinyl ethylene carbonate | 40.0% | 5% | 3.5 |
| Example 16 | 4% fluoroethylene carbonate and 1% vinylethylene carbonate | 18.0% | 6% | 3.0 |

| | | | | |
|---|---|---|---|---|
| Note: "j" indicates that such material is not added. | | | | |

### Comparative examples 8-12 and Examples 17-24

Lithium-ion batteries in Comparative examples 8-12 and Examples 17-24 were prepared according to the following preparation method, and a difference lies only in that different separators and electrolyte solutions were selected. The difference is specifically shown in Table 3.

### (1) Preparation of a positive electrode plate

A positive electrode active material LiCoO₂, a binder polyvinylidene fluoride (PVDF), and a conductive agent acetylene black were mixed at a weight ratio of 98.2:1.0:0.8, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 10 µm. The coated aluminum foil was baked in a five-stage oven with different temperatures and then dried in an oven at 120°C for 8 hours, followed by rolling and cutting, to obtain the required positive electrode plate.

### (2) Preparation of a negative electrode plate

A negative electrode material artificial graphite with a mass percentage of 96.9%, a conductive agent single-walled carbon nanotube (SWCNT) with a mass percentage of 0.1%, a conductive agent conductive carbon black (SP) with a mass percentage of 1%, a binder sodium carboxymethyl cellulose (CMC) with a mass percentage of 1.0%, and a binder styrene-butadiene rubber (SBR) with a mass percentage of 1.0% were made into a slurry by using a wet process. The slurry was applied on a surface of a negative electrode current collector with copper foil having a thickness of 6 µm, and then drying (temperature: 85°C, time: 5 hours), rolling and die cutting were carried out to obtain the negative electrode plate.

### (3) Preparation of a non-aqueous electrolyte solution

In a glove box filled with argon (moisture < 10 ppm, oxygen < 1 ppm), ethylene carbonate (EC), propylene carbonate (PC), and propyl propionate (PP) were evenly mixed at a mass ratio of 2:1:2, and LiPF₆ accounting for 14 wt% of a total mass of the non-aqueous electrolyte solution, ethyl propionate (specific amounts of ethyl propionate are shown in Table 3) accounting for 10-40 wt% of the total mass of the non-aqueous electrolyte solution, and an additive (specific amounts and types of additives are shown in Table 3) were slowly added into the mixed solution. The mixture was stirred evenly to obtain the non-aqueous electrolyte solution.

### (4) Preparation of a separator

Ceramic and N, N-dimethylacetamide were mixed with a solid content of 20% and stirred for 30 minutes at a speed of 1500 rpm, and the mixture was recorded as solution M.

A binder and N, N-dimethylacetamide were mixed with a solid content of 10% and stirred for 60 minutes at a speed of 1500 rpm, and the mixture was recorded as solution N.

A heat-resistant polymer and N, N-dimethylacetamide were mixed with a solid content of 5% and stirred for 240 minutes at a speed of 1500 rpm, and the mixture was recorded as solution L.

The solution M, N, L, and N,N-dimethylacetamide were mixed according to a specific proportion to obtain a mixed solution with a solid content of 6%. The mixed solution was applied on two sides of a separator polyethylene substrate having a thickness of 5 µm by using a gravure roller. After being watered and then dried, a separator C with two sides each having a thickness of 2 µm was obtained, and the two sides of the separator C each were coated with an adhesive layer having a thickness of 1 µm. The ceramic is aluminum oxide, the binder is PVDF-HFP, the heat-resistant polymer is aramid resin, and a polymer used in the adhesive layer is polymethyl methacrylate. A ratio of the ceramic and the heat-resistant polymer in the heat-resistant layer is 1: 9, and a proportion of the binder in the heat-resistant layer is shown in Table 3. An adhesive force between the prepared separator adhesive layer and the negative electrode is A, a peel force between the heat-resistant layer and the substrate is B, and a ratio of A to B is shown in Table 3.

### (5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

**Table 3 Lithium-ion batteries prepared in Comparative Examples 8-12 and Examples 17-24**

| Item | Compound containing nitrile functional groups (additive) | Proportion of ethyl propionate in total mass of non-aqueous electrolyte solution (%) | Proportion of binder in heat-resistant layer (%) | Ratio of A to B (in the separator, an adhesive force between the adhesive layer and the negative electrode is A, and a peel force between the heat-resistant layer and the substrate is B) |
|---|---|---|---|---|
| Comparative Example 9 | 3% 1,3,6-hexanetricarbonitrile | 0.0% | 0.5% | 0.7 |
| Comparative Example 9 | 3% 1,3,6-hexanetricarbonitrile | 0.0% | 2% | 3 |
| Comparative Example 10 | 3% 1,3,6-hexanetricarbonitrile | 15.0% | 0.5% | 0.7 |
| Comparative Example 11 | / | 15.0% | 0.5% | 0.7 |
| Comparative Example 12 | / | 15.0% | 2% | 3 |
| Example 17 | 3% 1,3,6-hexanetricarbonitrile | 15.0% | 2% | 3 |
| Example 18 | 3.5% adiponitrile | 20.0% | 1.5% | 1.5 |
| Example 19 | 2% succinonitrile and 1.5% adiponitrile | 25.0% | 4% | 2.0 |
| Example 20 | 1% succinonitrile | 10.0% | 20% | 5.0 |
| Example 21 | 4% ethylene glycol bis(2-cyanoethyl) ether | 28.0% | 6% | 2.5 |
| Example 22 | 3% glycerol trinitrile and 2.5% succinonitrile | 35.0% | 10% | 4.5 |
| Example 23 | 5% succinonitrile and 5% adiponitrile | 40.0% | 5% | 3.5 |
| Example 24 | 2% 1,3,6-hexanetricarbonitrile and 2.5% adiponitrile | 18.0% | 8% | 3.0 |

| | | | | |
|---|---|---|---|---|
| Note: "j" indicates that such material is not added. | | | | |

For the batteries, a test for heat resistance of a heat-resistant layer, a test for a thickness of a separator after dissection, and tests for an adhesive force, a peel force, and electrochemical performance were carried out. Details are as follows.

In the test for heat resistance of a heat-resistant layer, heat-resistant layers of separators in Comparative Examples 1-12 and Examples 1-24 were baked in an oven at (150±2)°C for 1 hour. A size of a separator before baking is recorded as L1, a size of the separator after baking is recorded as L2 (the size of a separator means a length of the separator in an Machine Direction (MD) or Transverse Direction (TD)), and then heat shrinkage of the separator is (L1-L2)/L1. Test results for Comparative Examples 1 and 2 and Examples 1-8 are shown in Table 1, test results for Comparative Examples 3-7 and Examples 9-16 are shown in Table 5, and test results for Comparative Examples 8-12 and Examples 17-24 are shown in Table 6.

In the test for a thickness of a separator after dissection, batteries in Comparative Examples 1-12 and Examples 1-24 were charged at a constant current of 0.7C, and a cut-off current was 0.05C. The batteries were left aside for 5 minutes after being fully charged, and then dissected, and a thickness test was performed on dissected separators. A thickness of a separator at a position in contact with an electrode plate is T1, a thickness of a separator at a position not in contact with the electrode plate is T2, a thickness of a substrate is T, and a content of a heat-resistant layer on the electrode plate (a residual amount of the heat-resistant layer of the pole piece) is (T2-T1)/(T2-T). Test results for Comparative Examples 1 and 2 and Examples 1-8 are shown in Table 1, test results for Comparative Examples 3-7 and Examples 9-16 are shown in Table 5, and test results for Comparative Examples 8-12 and Examples 17-24 are shown in Table 6.

In the test for adhesive performance, batteries in Comparative Examples 1-12 and Examples 1-24 were charged at a constant current of 0.7C, and a cut-off current was 0.05C. The batteries were left aside for 5 minutes after being fully charged, and then dissected. A negative electrode sample with a size of 40 mm in length * 18 mm in width was selected along a direction of a tab, and a 3M single-sided adhesive tape with a size of 15 mm* 100 mm was attached to the negative electrode sample. The 3M single-sided adhesive tape and a negative electrode plate at an included angle of 180 degrees were tested on a universal testing machine at a speed of 100 mm/min and a test displacement of 50 mm. A test result is recorded as an adhesive force A (unit: N/m) between a separator adhesive layer and a negative electrode.

In the test for a peel force, a steel plate with a size of 40 mm* 150 mm was selected, and a 3M double-sided adhesive tape with a size of 18 mm* 100 mm was attached to the steel plate. Then, a back face of a tested surface of a separator in Comparative Examples 1-12 and Examples 1-24 was attached to the 3M double-sided adhesive tape, and a 3M double-sided adhesive tape with a size of 15 mm*150 mm was attached to the tested surface of the separator. The 3M adhesive tape and the separator at an included angle of 180 degrees were tested on a universal testing machine at a speed of 100 mm/min and a test displacement of 50 mm. A test result is a peel force B (unit: N/m) between a separator heat-resistant layer and a substrate layer.

A value of A/B is calculated based on the value of A obtained in the test for adhesive performance and the value of B obtained in the test for a peel force. Test results for Comparative Examples 1 and 2 and Examples 1-8 are shown in Table 1, test results for Comparative Examples 3-7 and Examples 9-16 are shown in Table 2, and test results for Comparative Examples 8-12 and Examples 17-24 are shown in Table 3.

In a cycling test at 25°C, the batteries in Comparative Examples 1-7 and Examples 1-16 were placed in an environment of (25±2)°C for 2-3 hours. When bodies of the batteries reached a temperature of (25±2)°C, the batteries were charged at a constant current of 0.7C, and a cut-off current was 0.05C. The batteries were left aside for 5 minutes after being fully charged, and then discharged at a constant current of 0.5C to a cut-off voltage of 3.0 V The highest discharge capacity in the first three cycles was recorded as an initial capacity Q. When a number of cycles reached 1000, the last discharge capacity Q₁ of the battery was recorded.

Battery capacity retention rate (%) = Q₁/Q × 100%. Test results for Comparative Examples 1 and 2 and Examples 1-8 are shown in Table 4, and test results for Comparative Examples 3-7 and Examples 9-16 are shown in Table 5.

In a cycling test at 55°C, the batteries prepared in Comparative Examples 8-12 and Examples 17-24 were placed in an environment of (55±2)°C. After 2-3 hours, when bodies of the batteries reached a temperature of (55±2)°C, the batteries were charged at a constant current of 0.7C, and a cut-off current was 0.05C. The batteries were left aside for 5 minutes after being fully charged, and then discharged at a constant current of 0.5C to a cut-off voltage of 3.0 V The highest discharge capacity in the first three cycles was recorded as an initial capacity Q. When a number of cycles reached 300, the last discharge capacity Q₁ of the battery was recorded.

Battery capacity retention rate (%) = Q₁/Q × 100%. The test results are shown in Table 6.

In a low temperature discharge test at -20°C, batteries prepared in Comparative Examples 1 and 2, Comparative Examples 8-12, Examples 1-8, and Examples 17-24 were first discharged at 0.2C to 3.0 V at ambient temperature of (25±3)°C, and left aside for 5 minutes. Then the batteries were charged at 0.7C, and when a voltage at cell terminals reached a charging limit voltage, the batteries began to be charged at a constant voltage instead. The charging was not stopped until a charging current was less than or equal to a cut-off current. The batteries were left aside for 5 minutes and then discharged at 0.2C to 3.0 V, and a discharge capacity in this case was recorded as a normal-temperature capacity Q₂. Then cells were charged at 0.7C, and when a voltage at the cell terminals reached the charging limit voltage, the batteries began to be charged at a constant voltage. The charging was not stopped until a charging current is less than or equal to the cut-off current. The fully charged batteries were left aside at (-20±2)°C for 4 hours, and then discharged at 0.2C to a cut-off voltage 3.0V. A discharge capacity Q₃ was recorded to calculate a low-temperature discharge capacity retention rate.

Battery low-temperature discharge capacity retention rate (%) = Q₃/Q₂ × 100%. Test results for Comparative Examples 1 and 2 and Examples 1-8 are shown in Table 4, and test results for Comparative Examples 8-12 and Examples 17-24 are shown in Table 6.

In a low temperature discharge test at -10°C, batteries prepared in Comparative Examples 3-7 and Examples 9-16 were first discharged at 0.2C to 3.0 V at ambient temperature of (25±3)°C, and left aside for 5 minutes. Then the batteries were charged at 0.7C, and when a voltage at cell terminals reached a charging limit voltage, the batteries began to be charged at a constant voltage instead. The charging was not stopped until a charging current was less than or equal to a cut-off current. The batteries were left aside for 5 minutes and then discharged at 0.2C to 3.0 V, and a discharge capacity in this case was recorded as a normal-temperature capacity Q₂. Then cells were charged at 0.7C, and when a voltage at the cell terminals reached the charging limit voltage, the batteries began to be charged at a constant voltage. The charging was not stopped until a charging current is less than or equal to the cut-off current. The fully charged batteries were left aside at (-10±2)°C for 4 hours, and then discharged at 0.2C to a cut-off voltage 3.0V. A discharge capacity Q₃ was recorded to calculate a low-temperature discharge capacity retention rate.

Battery low-temperature discharge capacity retention rate (%) = Q₃/Q₂ × 100%. The test results are shown in Table 5.

In a thermal shock test at 150°C, the batteries prepared in Comparative Examples 1-12 and Examples 1-24 were heated in a convection mode or by using a circulation hot air box at a start temperature of (25±3)°C, with a temperature change rate of (5±2)°C/min. The temperature was raised to (150±2)°C, the batteries were kept in the temperature for 60 minutes, and then the test ended. Test results for Comparative Examples 1 and 2 and Examples 1-8 are shown in Table 4, test results for Comparative Examples 3-7 and Examples 9-16 are shown in Table 5, and test results for Comparative Examples 8-12 and Examples 17-24 are shown in Table 6.

In an over-charge test, the batteries obtained in Comparative Examples 1 to 12 and Examples 1-24 were charged to 5 V at a constant current of 3C rate, and states of the batteries were recorded. Test results for Comparative Examples 1 and 2 and Examples 1-8 are shown in Table 4, test results for Comparative Examples 3-7 and Examples 9-16 are shown in Table 5, and test results for Comparative Examples 8-12 and Examples 17-24 are shown in Table 6.

In a nail penetration test, a high-temperature resistant steel needle (a cone angle of the needle tip ranges from 45°C-60°C, and a surface of the needle is smooth without rust, oxide layer, or grease) with a diameter of Φ ranging from 5 mm to 8 mm penetrated through the batteries obtained in Comparative Examples 1 to 12 and Examples 1-24 from a direction perpendicular to plates of the batteries at a speed of (25±5) mm/s, and a piercing position was preferably close to a geometric center of a pierced surface (the steel needle remained in the batteries). Based on observation, after 1 hour or when a maximum temperature of surfaces of the batteries dropped to 10°C or below, the test ended. Test results for Comparative Examples 1 and 2 and Examples 1-8 are shown in Table 4, test results for Comparative Examples 3-7 and Examples 9-16 are shown in Table 5, and test results for Comparative Examples 8-12 and Examples 17-24 are shown in Table 6.

**Table 4 Experimental test results of batteries obtained in Comparative Examples 1 and 2 and Examples 1-8**

| | Capacity retention rate (%) after 1000 cycles at 0.7C and 25°C | Capacity retention rate (%) after discharge at 0.2C and -20°C | 150°C/60 min furnace temperature (ignition state: number of passed/number of tested) | Overcharge (ignition status: number of passed/number of tested) | Acupuncture (ignition status: number of passed/number of tested) |
|---|---|---|---|---|---|
| Comparative Example 1 | 68.63% | 54.62% | 5/30 | 12/30 | 2/30 |
| Comparative Example 2 | 72.45% | 60.38% | 3/30 | 7/30 | 0/30 |
| Example 1 | 73.05% | 61.23% | 30/30 | 30/30 | 30/30 |
| Example 2 | 69.24% | 55.40% | 30/30 | 30/30 | 30/30 |
| Example 3 | 75.32% | 64.08% | 30/30 | 30/30 | 30/30 |
| Example 4 | 80.46% | 75.60% | 30/30 | 30/30 | 30/30 |
| Example 5 | 72.88% | 60.98% | 30/30 | 30/30 | 30/30 |
| Example 6 | 75.98% | 66.82% | 30/30 | 30/30 | 30/30 |
| Example 7 | 74.05% | 62.45% | 30/30 | 30/30 | 30/30 |
| Example 8 | 77.36% | 68.53% | 30/30 | 30/30 | 30/30 |

**Table 5 Experimental test results of batteries obtained in Comparative Examples 3-7 and Examples 9-16**

| Group | Heat shrinkage of heat-resistant layer | Heat-resistant layer content on the electrode plate | Capacity retention rate after 1000 cycles at 25°C and 1C (%) | Capacity retention rate after discharge at 0.2C and - 10°C | Thermal shock for 60 minutes at 150°C | | Overcharge | | Acupuncture | |
|---|---|---|---|---|---|---|---|---|---|---|
| | | | | | Ignition (number of passed/ number of tested) | Explosion (number of passed/ number of tested) | Ignition (number of passed/ number of tested) | Explosion (number of passed/ number of tested) | Ignition (number of passed/ number of tested) | Explosion (number of passed/ number of tested) |
| Comparative Example 3 | 8.5% | 13% | 64.83% | 57.12% | 1/5 | 2/5 | 1/5 | 2/5 | 1/5 | 2/5 |
| Comparative Example 4 | 8.0% | 20% | 66.35% | 59.03% | 4/5 | 4/5 | 4/5 | 3/5 | 3/5 | 4/5 |
| Comparative Example 5 | 7.2% | 22% | 62.46% | 65.12% | 2/5 | 2/5 | 2/5 | 2/5 | 3/5 | 2/5 |
| Comparative Example 6 | 8.8% | 16% | 50.52% | 70.53% | 0/5 | 0/5 | 1/5 | 0/5 | 0/5 | 0/5 |
| Comparative Example 7 | 7.5% | 21% | 48.53% | 72.43% | 4/5 | 4/5 | 4/5 | 3/5 | 4/5 | 3/5 |
| Example 9 | 3% | 85% | 73.89% | 73.99% | 5/5 | 5/5 | 5/5 | 5/5 | 5/5 | 5/5 |
| Example 10 | 0.9% | 90% | 75.26% | 75.25% | 5/5 | 5/5 | 5/5 | 5/5 | 5/5 | 5/5 |
| Example 11 | 2.5% | 84% | 76.21% | 81.38% | 5/5 | 5/5 | 5/5 | 5/5 | 5/5 | 5/5 |
| Example 12 | 1.8% | 88% | 80.26% | 74.28% | 5/5 | 5/5 | 5/5 | 5/5 | 5/5 | 5/5 |
| Example 13 | 2.8% | 80% | 78.25% | 80.46% | 5/5 | 5/5 | 5/5 | 5/5 | 5/5 | 5/5 |
| Example 14 | 1.6% | 89% | 82.14% | 84.54% | 5/5 | 5/5 | 5/5 | 5/5 | 5/5 | 5/5 |
| Example 15 | 4% | 72% | 80.93% | 87.17% | 5/5 | 5/5 | 5/5 | 5/5 | 5/5 | 5/5 |
| Example 16 | 0.5% | 90% | 74.19% | 77.81% | 5/5 | 5/5 | 5/5 | 5/5 | 5/5 | 5/5 |

**Table 6 Experimental test results of batteries obtained in Comparative Examples 8-12 and Examples 17-24**

| Group | Heat shrinkage of heat -resistant layer | Residue of heat -resistant layer of the electrode | Capacity retention rate after 300 cycles at 55°C and 0.7C (%) | Capacity retention rate after discharge at 0.2C and - 20°C | Thermal shock for 60 minutes at 150°C | | Overcharge | | Acupuncture | |
|---|---|---|---|---|---|---|---|---|---|---|
| | | | | | Ignition (number of passed/ number of tested) | Explosion (number of passed/ number of tested) | Ignition (number of passed/ number of tested) | Explosion (number of passed/ number of tested) | Ignition (number of passed/ number of tested) | Explosion (number of passed/ number of tested) |
| Comparative Example 8 | 8.8% | 15% | 66.13% | 52.19% | 1/5 | 2/5 | 1/5 | 2/5 | 1/5 | 2/5 |
| Comparative Example 9 | 7.6% | 20% | 68.95% | 54.07% | 4/5 | 3/5 | 3/5 | 3/5 | 4/5 | 4/5 |
| Comparative Example 10 | 6.9% | 16% | 64.51% | 60.12% | 2/5 | 2/5 | 2/5 | 2/5 | 3/5 | 2/5 |
| Comparative Example 11 | 6.8% | 14% | 53.54% | 65.53% | 0/5 | 0/5 | 1/5 | 0/5 | 0/5 | 0/5 |
| Comparative Example 12 | 8.0% | 22% | 58.52% | 67.43% | 4/5 | 4/5 | 3/5 | 3/5 | 4/5 | 4/5 |
| Example 17 | 1% | 88% | 73.89% | 68.93% | 5/5 | 5/5 | 5/5 | 5/5 | 5/5 | 5/5 |
| Example 18 | 0.5% | 95% | 75.26% | 74.21% | 5/5 | 5/5 | 5/5 | 5/5 | 5/5 | 5/5 |
| Example 19 | 1.5% | 85% | 72.27% | 76.38% | 5/5 | 5/5 | 5/5 | 5/5 | 5/5 | 5/5 |
| Example 20 | 1.8% | 85% | 70.56% | 70.28% | 5/5 | 5/5 | 5/5 | 5/5 | 5/5 | 5/5 |
| Example 21 | 2.3% | 74% | 74.55% | 75.46% | 5/5 | 5/5 | 5/5 | 5/5 | 5/5 | 5/5 |
| Example 22 | 2.5% | 72% | 77.84% | 79.58% | 5/5 | 5/5 | 5/5 | 5/5 | 5/5 | 5/5 |
| Example 23 | 4% | 68% | 80.53% | 82.14% | 5/5 | 5/5 | 5/5 | 5/5 | 5/5 | 5/5 |
| Example 24 | 3.5% | 70% | 76.79% | 72.82% | 5/5 | 5/5 | 5/5 | 5/5 | 5/5 | 5/5 |

It may be learned from the results in Table 4 that, in the present application, an ethyl propionate solvent is added to an electrolyte solution, and a separator for which an adhesive force between an adhesive layer and positive and negative electrode plates is greater than a peel force between a heat-resistant layer and a substrate is used. Based on a synergistic effect of the foregoing conditions, safety performance of a lithium-ion battery can be significantly improved, and the battery can have both good high temperature electrical performance and low temperature electrical performance.

It may be learned from the results in Table 5 that, in the present application, an additive of a carbonate compound is added to an electrolyte solution, an ethyl propionate solvent is also added, and a separator for which an adhesive force between an adhesive layer and positive and negative electrode plates is greater than a peel force between a heat-resistant layer and a substrate is used. Based on a synergistic effect of the foregoing conditions, safety performance of a lithium-ion battery can be significantly improved, and the battery can have both good long-time cycling and low temperature electrical performance.

It may be learned from the results in Table 6 that, in the present application, an additive of a compound containing nitrile functional groups is added to an electrolyte solution, an ethyl propionate solvent is also added, and a separator for which an adhesive force between an adhesive layer and positive and negative electrode plates is greater than a peel force between a heat-resistant layer and a substrate is used. Based on a synergistic effect of the foregoing conditions, safety performance of a lithium-ion battery can be significantly improved, and the battery can have both good high temperature electrical performance and low temperature electrical performance.

The foregoing illustrates implementation of the present application. However, the present application is not limited to the foregoing implementation. Any modifications, equivalent replacements, and improvements made without departing from the spirit and principle of the present application shall fall within the protection scope of the present application.

## Claims

1. A separator, wherein the separator comprises a substrate, heat-resistant layers, and an adhesive layer, the heat-resistant layers are disposed on two opposite surfaces of the substrate, and the adhesive layer is disposed on the heat-resistant layer; and an adhesive force between the adhesive layer and negative electrode is A, a peel force between a heat-resistant layer and the substrate is B, and a ratio of A to B (A/B) is greater than 1.

2. The separator according to claim 1, wherein the ratio of A to B ranges from 2.5 to 6.5.

3. The separator according to claim 1 or 2, wherein a thickness of the heat-resistant layer ranges from 1 µm to 5 µm.

4. The separator according to any one of claims 1 to 3, wherein a heat shrinkage of the heat-resistant layer at 150°C for 1 hour is less than or equal to 5%.

5. The separator according to any one of claims 1 to 4, wherein the adhesive force A between the adhesive layer and the negative electrode is greater than or equal to 10 N/m.

6. The separator according to any one of claims 1 to 5, wherein the peel force B between the heat-resistant layer and the substrate is 5 N/m or less.

7. The separator according to any one of claims 1 to 6, wherein the substrate is selected from one, two, or more of polymer polyethylene, polypropylene, polyethylene terephthalate, polybutylene terephthalate, polystyrene, poly(p-phenylene), polyphenylene, polyimide, polyamide, aramid, or poly(p-phenylene benzobisthiazole).

8. The separator according to any one of claims 1 to 7, wherein the heat-resistant layer comprises a ceramic, a heat-resistant polymer, and a binder.

9. The separator according to claim 8, wherein in the heat-resistant layer, a mass proportion of the ceramic ranges from 5 wt% to 20 wt%.

10. The separator according to claim 8 or 9, wherein in the heat-resistant layer, a mass proportion of the heat-resistant polymer ranges from 60 wt% to 94 wt%.

11. The separator according to any one of claims 8 to 10, wherein in the heat-resistant layer, a mass proportion of the binder ranges from 0.5 wt% to 20 wt%.

12. The separator according to any one of claims 8 to 11, wherein the ceramic is selected from one, two, or more of silica, aluminum oxide, zirconium dioxide, magnesium hydroxide, boehmite, barium sulfate, fluorphlogopite, fluorapatite, mullite, cordierite, aluminum titanate, titanium dioxide, copper oxide, zinc oxide, boron nitride, aluminum nitride, magnesium nitride, or attapulgite.

13. The separator according to any one of claims 8 to 12, wherein the heat-resistant polymer is selected from one, two, or more of polyimide, aramid resin, polyamide, polybenzimidazole, polyphenyl ester, polyborodiphenylsiloxane, polyphenylene sulfide, chlorinated polyether, or polyarylsulfone.

14. The separator according to any one of claims 8 to 13, wherein the binder is selected from one, two, or more of polytetrafluoroethylene, polyvinylidene fluoride, a polyvinylidene fluoride-hexafluoropropylene copolymer, hexafluoropropylene modified polyvinylidene fluoride, polyimide, polyacrylonitrile, polymethyl methacrylate, cellulose acetate, butyl acetate cellulose, propyl acetate cellulose, cyanoethyl amylopectin, cyanoethyl polyvinyl alcohol, cyanoethyl cellulose, cyanoethyl sucrose, amylopectin, carboxymethyl cellulose, or an acrylonitrile styrene butadiene copolymer.

15. The separator according to any one of claims 1 to 14, wherein a thickness of the adhesive layer ranges from 0.5 µm to 2 µm.

16. The separator according to any one of claims 1 to 15, wherein a copolymer used in the adhesive layer is selected from one, two, or more of polytetrafluoroethylene, polyvinylidene fluoride, a polyvinylidene fluoride-hexafluoropropylene copolymer, hexafluoropropylene modified polyvinylidene fluoride, polyimide, polyacrylonitrile, polymethyl methacrylate, cellulose acetate, butyl acetate cellulose, propyl acetate cellulose, cyanoethyl amylopectin, cyanoethyl polyvinyl alcohol, cyanoethyl cellulose, cyanoethyl sucrose, amylopectin, carboxymethyl cellulose, or an acrylonitrile styrene butadiene copolymer.

17. A battery, wherein the battery comprises the separator according to any one of claims 1 to 16.

18. The battery according to claim 17, wherein the battery further comprises a positive electrode plate, a negative electrode plate, and a non-aqueous electrolyte solution; and the separator according to any one of claims 1 to 16 is disposed between the positive electrode plate and the negative electrode plate.

19. The battery according to claim 18, wherein the non-aqueous electrolyte solution comprises a non-aqueous organic solvent, an additive, and a lithium salt, and the non-aqueous organic solvent comprises ethyl propionate.

20. The battery according to claim 19, wherein an addition amount of the ethyl propionate is 10-50 wt% of a total mass of the non-aqueous electrolyte solution.

21. The battery according to claim 19, wherein the lithium salt accounts for 13-20 wt% of a total mass of the non-aqueous electrolyte solution.

22. A battery, comprising a positive electrode plate, a negative electrode plate, a separator disposed between the positive electrode plate and the negative electrode plate, and a non-aqueous electrolyte solution;
the separator is the separator according to claim 1; and
the non-aqueous electrolyte solution comprises a non-aqueous organic solvent, an additive, and a lithium salt, wherein the non-aqueous organic solvent comprises ethyl propionate, and the additive comprises a carbonate compound.

23. The battery according to claim 22, wherein the carbonate compound accounts for 1-10 wt% of a total mass of the non-aqueous electrolyte solution.

24. The battery according to claim 22 or 23, wherein an addition amount of the ethyl propionate is 10-40 wt% of a total mass of the non-aqueous electrolyte solution.

25. The battery according to any one of claims 22 to 24, wherein the carbonate compound is selected from at least one of fluoroethylene carbonate, vinylene carbonate, vinyl ethylene carbonate, or ethylene carbonate.

26. The battery according to any one of claims 22 to 25, wherein the additive further comprises another additive, and the another additive is at least one of tris(trimethyl)silane phosphite, tris(trimethylsilyl) borate, lithium bis(trifluoromethanesulphonyl)imide, lithium bis(fluorosulfonyl)imide, 1,3-propanesulfonate, 1,3-propenesultone, ethylene sulphite, ethylene sulfate, vinylene carbonate, fluoroethylene carbonate, lithium bis(oxalate)oborate, lithium difluoro(oxalate)borate, lithium difluoro(oxalate)phosphate or vinyl ethylene carbonate.

27. The battery according to claim 26, wherein an addition amount of the another additive accounts for 0-10 wt% of a total mass of the non-aqueous electrolyte solution.

28. The battery according to any one of claims 22 to 27, wherein the non-aqueous organic solvent further comprises at least one of ethylene carbonate, propylene carbonate, dimethyl carbonate, diethyl carbonate, ethyl methyl carbonate, propyl propionate, or propyl acetate.

29. The battery according to any one of claims 22 to 28, wherein the lithium salt is selected from at least one of lithium bis(trifluoromethanesulfonyl)imide, lithium bis(fluorosulfonyl)imide, or lithium hexafluorophosphate.

30. The battery according to any one of claims 22 to 29, wherein the lithium salt accounts for 13-20 wt% of a total mass of the non-aqueous electrolyte solution.

31. The battery according to any one of claims 22 to 30, wherein in the separator, a ratio of A to B ranges from 1.5 to 6.0.

32. The battery according to any one of claims 22 to 31, wherein in the separator, a thickness of a heat-resistant layer ranges from 1 µm to 3 µm.

33. The battery according to any one of claims 22 to 32, wherein in the separator, a heat shrinkage of a heat-resistant layer at 150°C for 1 hour is less than or equal to 5%.

34. The battery according to any one of claims 22 to 33, wherein in the separator, an adhesive force between an adhesive layer and negative electrode is greater than or equal to 10 N/m.

35. The battery according to any one of claims 22 to 34, wherein in the separator, a peel force B between a heat-resistant layer and a substrate is 5 N/min or less.

36. The battery according to any one of claims 22 to 35, wherein in the separator, a substrate is selected from one, two, or more of polyethylene, polypropylene, polyimide, polyamide, or aramid.

37. The battery according to any one of claims 22 to 36, wherein in the separator, a heat-resistant layer comprises a ceramic, a heat-resistant polymer, and a binder.

38. The battery according to claim 37, wherein in the heat-resistant layer, a proportion of the ceramic ranges from 5 wt% to 20 wt%.

39. The battery according to any one of claims 37 or 38, wherein in the heat-resistant layer, a proportion of the heat-resistant polymer ranges from 60 wt% to 94 wt%.

40. The battery according to any one of claims 37 to 39, wherein in the heat-resistant layer, a proportion of the binder ranges from 0.5 wt% to 20 wt%.

41. The battery according to any one of claims 37 to 40, wherein the ceramic is selected from one, two, or more of aluminum oxide, boehmite, magnesium oxide, boron nitride, or magnesium hydroxide.

42. The battery according to any one of claims 37 to 41, wherein the heat-resistant polymer is selected from one or two of polyimide, aramid resin, polyamide, or polybenzimidazole.

43. The battery according to any one of claims 37 to 42, wherein the binder is selected from one, two, or more of polytetrafluoroethylene, polyvinylidene fluoride, polyvinylidene fluoride-hexafluoropropylene modification and a copolymer thereof, polyimide, polyacrylonitrile, or polymethyl methacrylate.

44. The battery according to any one of claims 37 to 43, wherein in the separator, a thickness of the adhesive layer ranges from 0.5 µm to 2 µm.

45. The battery according to any one of claims 37 to 44, wherein in the separator, a polymer used in an adhesive layer is selected from one, two, or more of polytetrafluoroethylene, polyvinylidene fluoride, a polyvinylidene fluoride-hexafluoropropylene copolymer and a modified copolymer thereof, polyimide, polyacrylonitrile, or polymethyl methacrylate.

46. A battery, comprising a positive electrode plate, a negative electrode plate, a separator disposed between the positive electrode plate and the negative electrode plate, and a non-aqueous electrolyte solution;
the separator is the separator according to claim 1; and
the non-aqueous electrolyte solution comprises a non-aqueous organic solvent, an additive, and a lithium salt, wherein the non-aqueous organic solvent comprises ethyl propionate, and the additive comprises a compound comprising a nitrile group.

47. The battery according to claim 46, wherein an addition amount of the ethyl propionate is 10-40 wt% of a total mass of the non-aqueous electrolyte solution.

48. The battery according to claim 46 or 47, wherein in the non-aqueous electrolyte solution, an addition amount of the compound comprising a nitrile group accounts for 1-10 wt% of a total mass of the non-aqueous electrolyte solution.

49. The battery according to any one of claims 46 to 48, wherein the compound comprising a nitrile group is selected from at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylbutadionitrile, 2-methylglutaronitrile, 2,4-dimethylglutaronitrile, 2,2,4,4-Tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,5-dioxa-heptadionitrile, 1,4-bis(cyanoethoxy)butane, ethylene glycol bis(2-cyanoethyl) ether, diethylene glycol bis(2-cyanoethyl) ether, triethylene glycol bis(2-cyanoethyl) ether, tetraethylene glycol bis(2-cyanoethyl) ether, 3,6,9,12,15,18-hexaoxeicosanic acid dinitrile, 1,3-bis(2-cyanoethoxy)propane, 1,4-bis(2-cyanoethoxy) butane, 1,5-bis(2-cyanoethoxy)pentane, ethylene glycol bis(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,6-dicyano-2-methyl-5-methyl-3-hexene, 1,3,5-pentatrionitrile, 1,2,3-propanetricarbonitrile, 1,3,6-hexane trinitrile , glycerol trinitrile, 1,2,6-hexane trinitrile, 1,2,3-tri(2-cyanoethoxy)propane, 1,2,4-tri(2-cyanoethoxy) butane, 1,1,1-tri(cyanoethoxymethylene)ethane, 1,1,1-tri(cyanoethoxymethylene)propane, 3 -methyl-1,3,5-tri(cyanoethoxy)pentane, 1,2,7-tri(cyanoethoxy)heptane, 1,2,6-tri(cyanoethoxy) hexane, or 1,2,5-tri(cyanoethoxy)pentane.

50. The battery according to any one of claims 46 to 49, wherein the additive further comprises another additive, and the other additive is at least one of tris(trimethylsilane) phosphite, tris(trimethylsilyl) borate, lithium bis(trifluoromethanesulphonyl)imide, lithium bis(fluorosulfonyl)imide, 1,3-propanesulfonate, 1,3-propenesultone, ethylene sulphite, ethylene sulfate, vinylene carbonate, fluoroethylene carbonate, lithium bis(oxalate)oborate, lithium difluoro(oxalate)borate, lithium difluoro(oxalate)phosphate or vinyl ethylene carbonate.

51. The battery according to any one of claims 46 to 50, wherein an addition amount of the another additive accounts for 0-10 wt% of a total mass of the non-aqueous electrolyte solution.

52. The battery according to any one of claims 46 to 51, wherein the non-aqueous organic solvent further comprises at least one of ethylene carbonate, propylene carbonate, dimethyl carbonate, diethyl carbonate, ethyl methyl carbonate, propyl propionate, or propyl acetate.

53. The battery according to any one of claims 46 to 52, wherein the lithium salt is selected from at least one of lithium bis(trifluoromethanesulfonyl)imide, lithium bis(fluorosulfonyl)imide, or lithium hexafluorophosphate.

54. The battery according to any one of claims 46 to 53, wherein the lithium salt accounts for 13-20 wt% of a total mass of the non-aqueous electrolyte solution.

55. The battery according to any one of claims 46 to 54, wherein in the separator, a ratio of A to B ranges from 1.5 to 4.5.

56. The battery according to any one of claims 46 to 55, wherein in the separator, a thickness of a heat-resistant layer ranges from 1 µm to 3 µm.

57. The battery according to any one of claims 46 to 56, wherein in the separator, a heat shrinkage of a heat-resistant layer at 150°C for 1 hour is less than or equal to 5%.

58. The battery according to any one of claims 46 to 57, wherein in the separator, an adhesive force between an adhesive layer and negative electrode is greater than or equal to 10 N/m.

59. The battery according to any one of claims 46 to 58, wherein in the separator, a peel force B between a heat-resistant layer and a substrate is 5 N/min or less.

60. The battery according to any one of claims 46 to 59, wherein in the separator, a substrate is selected from one, two, or more of polyethylene, polypropylene, polyimide, polyamide, or aramid.

61. The battery according to any one of claims 46 to 60, wherein in the separator, a heat-resistant layer comprises a ceramic, a heat-resistant polymer, and a binder.

62. The battery according to claim 61, wherein in the heat-resistant layer, a proportion of the ceramic ranges from 5 wt% to 20 wt%.

63. The battery according to any one of claims 61 or 62, wherein in the heat-resistant layer, a proportion of the heat-resistant polymer ranges from 60 wt% to 94 wt%.

64. The battery according to any one of claims 61 to 63, wherein in the heat-resistant layer, a proportion of the binder ranges from 0.5 wt% to 20 wt%.

65. The battery according to any one of claims 61 to 64, wherein the ceramic is selected from one, two, or more of aluminum oxide, boehmite, magnesium oxide, boron nitride, or magnesium hydroxide.

66. The battery according to any one of claims 61 to 65, wherein the heat-resistant polymer is selected from one or two of polyimide, aramid resin, polyamide, or polybenzimidazole.

67. The battery according to any one of claims 61 to 66, wherein the adhesive is selected from one, two, or more of polytetrafluoroethylene, polyvinylidene fluoride, polyvinylidene fluoride-hexafluoropropylene modification and a copolymer thereof, polyimide, polyacrylonitrile, or polymethyl methacrylate.

68. The battery according to any one of claims 61 to 67, wherein in the separator, a thickness of the adhesive layer ranges from 0.5 µm to 2 µm.

69. The battery according to any one of claims 61 to 68, wherein in the separator, a polymer used in an adhesive layer is selected from one, two, or more of polytetrafluoroethylene, polyvinylidene fluoride, polyvinylidene fluoride-hexafluoropropylene copolymer and a modified copolymer thereof, polyimide, polyacrylonitrile, or polymethyl methacrylate.
